# EUROPEAN PATENT APPLICATION

(11) **EP 4 155 466 A1**
(43) Date of publication of application: **29.03.2023**
(21) Application number: 21198898.5
(22) Date of filing: 24.09.2021
(51) Int. Cl.: E02F 9/20, E02F 9/22, B60L 1/00, B60W 50/00

(54) **METHOD OF CONTROLLING WORKING MACHINE, CONTROL SYSTEM AND WORKING MACHINE**

(71) Applicant: Volvo Construction Equipment AB, 631 85 Eskilstuna (SE)
(72) Inventor: STENER, Patrik, 644 30 TORSHÄLLA (SE); HUGGARE, Viktor, 725 93 VÄSTERÅS (SE); LOKRANTZ, Johan, 632 25 ESKILSTUNA (SE)
(74) Representative: Kransell & Wennborg KB

(57) **Abstract**

The invention relates to a method of controlling a working machine (10). The working machine (10) comprises a first power source (40) arranged to drive a mechanical driveline (12), a hydraulic system (14) comprising a hydraulic pump (48a-48c) and an actuator (36a-36c) arranged to be driven to move by the hydraulic pump (48a-48c), where the hydraulic pump (48a-48c) is separated from, or disconnectable from, the first power source (40). The method comprises determining (S1) whether the working machine (10) is in an increased response mode (96). The method further comprises increasing (S2) a response of the hydraulic system (14) upon determining that the working machine (10) is in the increased response mode (96).

## Description

### TECHNICAL FIELD

The invention relates to a method of controlling a working machine, a control system for controlling a working machine, and a working machine comprising a control system. The invention is applicable to various working machines, such as wheel loaders, articulated haulers and excavators. Although the invention will be described mainly with respect to a wheel loader, the invention is not restricted to this particular working machine.

### BACKGROUND

When operating a working machine comprising a hydraulic system for driving one or more hydraulic functions, the response of the hydraulic system is often crucial. A wheel loader typically comprises two major subsystems: a mechanical driveline and the hydraulic system. In a conventional wheel loader, the mechanical driveline and hydraulic system are both driven directly by a common internal combustion engine. The engine is controlled by the driver by means of the accelerator pedal. The response of the hydraulic system is therefore dependent on the position of the accelerator pedal.

US 2015204053 A1 discloses an engine control method for a wheel loader. The wheel loader comprises an engine, working equipment configured to be driven by the engine, and a travel device configured to be driven by the engine. The method comprises determining whether or not the wheel loader is in an excavation operation and whether or not the wheel loader is in a loading operation. An excavation torque curve for the engine is selected when the wheel loader is in the excavation operation. In case the wheel loader is in the loading operation, an accelerator displacement is detected. One non-excavation torque curve for the engine is then selected depending on the accelerator displacement.

### SUMMARY

Conventional wheel loaders where both the mechanical driveline and the hydraulic system are driven by a common internal combustion engine are energy inefficient. This is because both the mechanical driveline and one or more hydraulic pumps for the hydraulic functions are always revved up when a rotational speed of the engine increases. This happens even if only the functionality of one of the subsystems is needed and there is no possibility to differentiate between the two subsystems. Energy losses of the hydraulic pumps increase with increasing rotational speeds thereof. If a high flow of hydraulic oil is required to the hydraulic functions, the speed of the engine must be high, meaning also that the speed to the mechanical driveline will increase even though this may not be desired. This may for example result in high losses in a torque converter of a gearbox. Thus, if the mechanical driveline needs a high performance/response, also the hydraulic system has to be given a high performance/response, and vice versa. Although the response characteristic of the hydraulic system is generally good in such conventional wheel loaders, this is an energy wasting solution.

With a decoupled system, where the mechanical driveline and the hydraulic system are separated, energy losses can be reduced by minimizing drag losses when the hydraulic system is at standby. When the hydraulic system is at standby, the hydraulic pumps do not have to rotate when driving the mechanical driveline. However, when the hydraulic system is at standby, the response of the hydraulic system is low. Although this may be acceptable in many use cases, this reduced response makes the operability poor in some use cases. One such use case, when the response is crucial, is an excavation phase.

During the excavation phase of a wheel loader having a decoupled system, the mechanical driveline is driven with high power. The hydraulic system however, has a low power output until the bucket of the wheel loader is lifted. This lifting should be done with a high response of the hydraulic system to give the driver good operability.

An object of the invention is to provide a method of controlling a working machine, which method enables an improved performance of the working machine.

According to a first aspect, this object is achieved by a method of controlling a working machine according to claim 1. The working machine comprises a first power source arranged to drive a mechanical driveline, a hydraulic system comprising a hydraulic pump and an actuator arranged to be driven to move by the hydraulic pump, where the hydraulic pump is separated from, or disconnectable from, the first power source. The method comprises determining whether the working machine is in an increased response mode. The method further comprises increasing a response of the hydraulic system upon determining that the working machine is in the increased response mode.

The actuator hydraulically driven by the hydraulic pump may be referred to as a hydraulic function. When the hydraulic pump is separated from, or disconnectable from, the first power source, the hydraulic system constitutes a decoupled hydraulic system. With a decoupled hydraulic system, the mechanical driveline and the hydraulic functions are separated.

By increasing the response of the hydraulic system upon determining that the working machine is in the increased response mode, the hydraulic system is prepared for an operation in the increased response mode, such as an excavation mode, prior to the operation. The invention enables a response boost to be provided to the hydraulic system only when needed, i.e. in the increased response mode. The invention thereby enables a reduction of energy consumption when the working machine is not in the increased response mode. In this way, the hydraulic system will be responsive immediately when requested by the driver while at the same time a high overall energy efficiency of the working machine is enabled. The performance of the working machine is thereby improved.

The first power source may for example be an electric motor or an internal combustion engine. The actuator may be a hydraulic cylinder. The hydraulic system may comprise a plurality of hydraulic pumps for hydraulically driving a plurality of actuators.

The working machine may comprise an implement, such as a bucket. The implement may be configured to be driven by the actuator. The working machine may comprise one or more actuators. In this case, a plurality of actuators may drive a common implement, such as a bucket. The working machine may be of any type according to the invention.

According to one embodiment, the increase of the response comprises increasing a rotational speed of the hydraulic pump. When the rotational speed of the hydraulic pump is increased, energy losses increase but also the response of the hydraulic system increases.

According to one embodiment, the increase of the response comprises changing a filter for a lever signal from an actuator lever for operating the hydraulic system. The filter may be changed such that a gain between the lever signal and a control signal to a valve arrangement associated with the actuator is increased. In this way, the actuator will react stronger to movements of the manual actuator lever.

According to one embodiment, the working machine comprises a bucket, and the increased response mode is an excavation mode. By automatically increasing the response of the hydraulic system upon entering the excavation mode, a more seamless excavation is enabled since there is no reaction delay of the actuator.

An alternative example of an increased response mode is a gearshift mode for preparing for gearshifts. The working machine may for example comprise a hydraulic clutch for a gearbox. The hydraulic clutch is a further example of an actuator according to the invention. When a rotational speed of the first power source is increased or decreased, it can be concluded that a gearshift is imminent. It can then be determined that the working machine is in an increased response mode. In this way, the response can be increased for a hydraulic pump associated with the hydraulic clutch before the gearshift is performed to provide an increased hydraulic pressure to the clutch. Also in this way, the performance of the working machine is improved.

According to one embodiment, the determination of whether the working machine is in the increased response mode is made based on one or more of a kickdown signal; a disconnection of a hydraulic energy storage of the hydraulic system; a position of the actuator; a gearshift pattern; an acceleration signal from an accelerator pedal; a speed pattern of a traveling speed of the working machine; and detection data from a detection device.

The kickdown signal may be provided from a kickdown button operated by the driver. Upon receiving the kickdown signal, the mechanical driveline may be controlled to perform a gear down shift when given that a traveling speed of the working machine is below a threshold value. The kickdown signal thus enables the driver to temporarily obtain a higher drag force of the working machine.

The working machine may comprise a hydraulic energy storage associated with at least one actuator. Each hydraulic energy storage may be a suspension accumulator. When the hydraulic energy storage is in fluid communication with the actuator, the stiffness of the actuator is reduced. A bucket or other implement controlled by the actuators is thereby allowed to move relative to a body section of the working machine. In some operational phases, such as in an excavation phase, one or more hydraulic energy storages can be fluidly disconnected from the associated actuator to temporarily increase a stiffness of the one or more actuators. To this end, a disconnection signal may be provided from a disconnection button operated by the driver. Upon receiving the disconnection signal, each hydraulic energy storage can be controlled to be disconnected.

Various positions of the actuator can be used to conclude whether whether the working machine is in the increased response mode. For example, if the working machine changes direction of travel from rearward to forward and a bucket is lowered in a so-called load cycle, it can be determined that the working machine is in an excavation mode.

Furthermore, various gearshift patterns can be used, optionally in combination with traveling speed patterns, to conclude that the working machine is about to travel into a pile. Also in this way, it can be determined that the working machine is in an excavation mode.

Furthermore, in case the working machine repeatedly changes travel directions between forward and rearward, it can be concluded that the working machine is in a load cycle. When the working machine travels forward in such load cycle, an excavation phase can be expected and it can therefore be determined that the working machine is in an increased response mode.

The working machine may comprise a detection device. The detection device may be configured to generate detection data representative of an environment of the working machine. Based on the detection data, it can be concluded that the working machine is in an increased response mode. The detection device may for example be configured to detect a pile and/or a distance to a pile.

The detection device may comprise a distance sensor device or a camera device. The distance sensor device may be a sensor configured to emit and detect reflection of electromagnetic waves. The distance sensor device may for example be a radar, a lidar, an infrared sensor or an ultrasonic sensor. One example of a suitable radar is a continuous-wave frequency-modulated (CWFM) radar. The camera device may be a single camera or a stereo camera.

According to one embodiment, the method further comprises decreasing the response upon determining that the working machine is no longer in the increased response mode. In this way, energy consumption by the hydraulic system can be reduced. As a consequence, an overall energy efficiency of the working machine is improved. The decrease of the response may for example comprise decreasing the rotational speed of the hydraulic pump and/or changing the filter for the lever signal.

According to one embodiment, the working machine comprises a second power source arranged to drive the hydraulic pump, and the first power source is arranged to operate independently of the second power source. In this case, the mechanical driveline and the hydraulic pump can be provided with speed and torque independent from each other. The second power source may for example be an electric motor or an internal combustion engine.

According to one embodiment, the working machine is a wheel loader. The wheel loader may comprise a bucket. In this case, the hydraulic system may comprise at least two actuators in the form of hydraulic cylinders. One hydraulic cylinder can be used to lift the bucket and one hydraulic cylinder can be used to tilt the bucket.

The invention also relates to a control system for controlling a working machine. The working machine comprises a first power source arranged to drive a mechanical driveline, a hydraulic system comprising a hydraulic pump and an actuator arranged to be driven to move by the hydraulic pump, where the hydraulic pump is separated from, or disconnectable from, the first power source. The control system comprises at least one data processing device and at least one memory having at least one computer program stored thereon, the at least one computer program comprising program code which, when executed by the at least one data processing device, causes the at least one data processing device to perform the step of determining whether the working machine is in an increased response mode. The at least one computer program further comprises program code which, when executed by the at least one data processing device, causes the at least one data processing device to perform the step of commanding increase of a response of the hydraulic system upon determining that the working machine is in the increased response mode.

According to one embodiment, the increase of the response comprises increasing a rotational speed of the hydraulic pump. The control system may thus be configured to increase the rotational speed of the hydraulic pump upon determining that the working machine is in the increased response mode.

According to one embodiment, the increase of the response comprises changing a filter for a lever signal from a manual lever for operating the hydraulic system. The control system may be configured to send a control signal to a valve arrangement associated with the actuator, where the control signal is determined based on the lever signal and the filter.

According to one embodiment, the determination of whether the working machine is in the increased response mode is made based on one or more of a kickdown signal; a disconnection of a hydraulic energy storage of the hydraulic system; a position of the actuator; a gearshift pattern; an acceleration signal from an accelerator pedal; a speed pattern of a traveling speed of the working machine; and detection data from a detection device. The control system may be configured to control the mechanical driveline based on the kickdown signal. The control system may be configured to send a control signal to a disconnection valve associated with the hydraulic energy storage based on a disconnection signal from the driver. The control system may be configured to receive an actuator position signal indicative of a position of the actuator. The control system may be configured to control the first power source based on the acceleration signal.

According to one embodiment, the at least one computer program comprises program code which, when executed by the at least one data processing device, causes the at least one data processing device to perform the step of commanding a decrease of the response upon determining that the working machine is no longer in the increased response mode.

The invention also relates to a working machine. The working machine comprises a mechanical driveline; a first power source arranged to drive the mechanical driveline; and a hydraulic system comprising a hydraulic pump and an actuator arranged to be driven to move by the hydraulic system, where the hydraulic pump is separated from, or disconnectable from, the first power source. The working machine further comprises a control system according to the invention. The working machine may be of any type as described in connection with the method of the invention.

According to one embodiment, the working machine comprises a bucket, and the increased response mode is an excavation mode. The working machine may comprise one or more hydraulic pumps. Each hydraulic pump may drive one or more associated actuators.

According to one embodiment, the working machine comprises a second power source arranged to drive the hydraulic pump, and the first power source is arranged to operate independently of the second power source. The second power source may for example be an electric motor or an internal combustion engine.

According to one embodiment, the working machine is a wheel loader.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 schematically illustrates a side view of a wheel loader according to the invention;
Fig. 2 is a block diagram illustrating components of the wheel loader;
Fig. 3 schematically illustrates a side view of the wheel loader and a pile;
Fig. 4 schematically illustrates a side view of the wheel loader when traveling towards the pile in an increased response mode;
Fig. 5a is a schematic and illustrative diagram of a lifting lever signal versus time;
Fig. 5b is a schematic and illustrative diagram of the speed of a hydraulic pump according to the prior art and the speed of a hydraulic pump of the invention as a function of the lifting lever signal in Fig. 5a; and
Fig. 6 is a flowchart outlining the general steps of the method according to the invention.

### DETAILED DESCRIPTION OF EXAMPLE EMBODIMENTS OF THE INVENTION

In the following, a method of controlling a working machine, a control system for controlling a working machine, and a working machine comprising a control system, will be described. The same reference numerals will be used to denote the same or similar structural features.

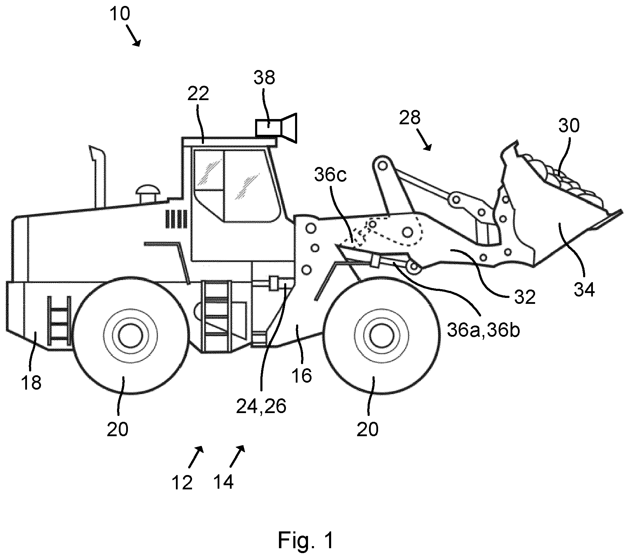

Fig. 1 schematically illustrates a side view of a wheel loader 10 according to the invention. The wheel loader 10 is one example of a working machine according to the invention. The wheel loader 10 comprises a mechanical driveline 12 and a hydraulic system 14.

The wheel loader 10 of this example comprises a front body section 16 and a rear body section 18, which sections each has an axle for driving a pair of wheels 20. The rear body section 18 comprises a cab 22. The body sections 16, 18 are connected to each other in such a way that they can pivot in relation to each other around a vertical axis by means of two first actuators in the form of hydraulic cylinders 24, 26 arranged between the two body sections 16, 18. The hydraulic cylinders 24, 26 are thus arranged one on each side of a horizontal centerline of the wheel loader 10 in a traveling direction in order to turn the wheel loader 10.

The wheel loader 10 of this example further comprises an equipment 28 for handling objects or material 30. The equipment 28 comprises a load-arm unit 32, also referred to as a linkage, and an implement in the form of a bucket 34 fitted on the load-arm unit 32. A first end of the load-arm unit 32 is pivotally connected to the front body section 16. The bucket 34 is pivotally connected to a second end of the load-arm unit 32. The load-arm unit 32 with the bucket 34 thereon can be raised and lowered relative to the front body section 16 by means of two boom or lifting hydraulic cylinders 36a, 36b, each of which is connected at one end to the front body section 16 and at the other end to the load-arm unit 32. The bucket 34 can be tilted relative to the load-arm unit 32 by means of a bucket or tilting hydraulic cylinder 36c. The wheel loader 10 is mainly used to move material 30 from one position to another. The initial position is often a pile of some material 30, and the other position is a load receiver.

The wheel loader 10 of this example further comprises a camera device 38. The camera device 38 is one example of a detection device according to the invention. As shown in Fig. 1, the camera device 38 is here positioned on the cab 22 but may be positioned elsewhere on the wheel loader 10. The camera device 38 faces in a forward direction.

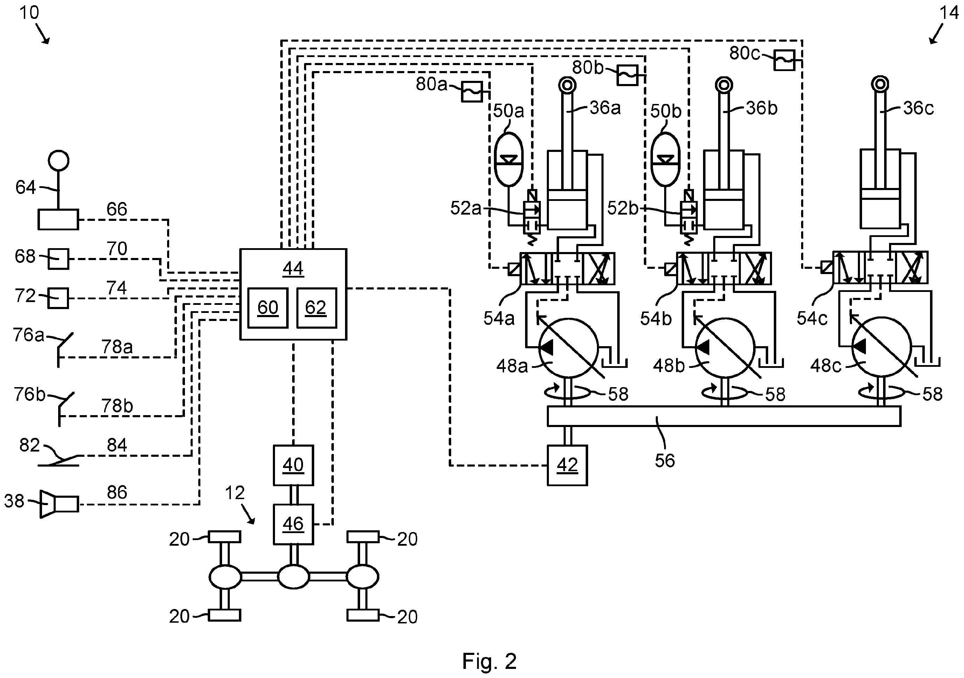

Fig. 2 is a block diagram illustrating some components of the wheel loader 10. The wheel loader 10 of this example comprises a first power source 40, a second power source 42 and a control system 44 for controlling each of the first power source 40 and the second power source 42. Each of the first power source 40 and the second power source 42 is here exemplified as an electric motor. One or both of the first power source 40 and the second power source 42 may alternatively be, for example, an internal combustion engine.

The first power source 40 is configured to drive the mechanical driveline 12. As shown in Fig. 2, the mechanical driveline 12 of this example comprises a gearbox 46. The gearbox 46 is in signal communication with the control system 44. The gearbox 46 may comprise a torque converter (not shown).

The hydraulic system 14 of this specific example comprises a lifting hydraulic pump 48a for hydraulically driving the lifting hydraulic cylinder 36a, a lifting hydraulic pump 48b for hydraulically driving the lifting hydraulic cylinder 36b, and a tilting hydraulic pump 48c for hydraulically driving the tilting hydraulic cylinder 36c. Each hydraulic pump 48a-48c is configured to provide pressurized hydraulic oil to its associated hydraulic cylinder 36a-36c. Each hydraulic cylinder 36a-36c is an example of an actuator according to the invention. The first power source 40 is configured to drive the hydraulic pumps 48a-48c. As shown in Fig. 2, each hydraulic cylinder 36a-36c is separated from the first power source 40. The first power source 40 and the second power source 42 operate independently.

The hydraulic system 14 of this specific example further comprises a suspension accumulator 50a associated with the lifting hydraulic cylinder 36a, and a suspension accumulator 50b associated with the lifting hydraulic cylinder 36b. Each suspension accumulator 50a, 50b is an example of a hydraulic energy storage according to the invention. Each suspension accumulator 50a, 50b is configured to store and release hydraulic energy. To this end, the hydraulic system 14 further comprises a disconnection valve 52a associated with the suspension accumulator 50a, and a disconnection valve 52b associated with the suspension accumulator 50b. Each disconnection valve 52a, 52b is here exemplified as an on-off valve. Each disconnection valve 52a, 52b is controlled by the control system 44.

The hydraulic system 14 of this specific example further comprises a lifting valve arrangement 54a associated with the lifting hydraulic cylinder 36a, a lifting valve arrangement 54b associated with the lifting hydraulic cylinder 36b, and a tilting valve arrangement 54c associated with the tilting hydraulic cylinder 36c. Each valve arrangement 54a-54c is configured to control oil flow to and from chambers of the respectively associated hydraulic cylinders 36a-36c. Each valve arrangement 54a-54c is here exemplified as a 5/3 directional control valve. Each valve arrangement 54a-54c is controlled by the control system 44.

It should be understood that the hydraulic system 14 in Fig. 2 is merely one of many examples. According to one example, one of the hydraulic pumps 48a-48c hydraulically drives a plurality of the hydraulic cylinders 36a-36c. According to a further example, the hydraulic system 14 comprises two tilting hydraulic cylinders 36c. According to a further example, one of the suspension accumulators 50a, 50b is associated with both lifting hydraulic cylinders 36a, 36b.

The wheel loader 10 further comprises a transmission 56. The transmission 56 is configured to transmit a rotation of an output shaft of the second power source 42 to a rotation of each input shaft of the hydraulic pumps 48a-48c. To this end, the transmission 56 may comprise a gear train. Fig. 2 further shows a rotational speed 58 of the hydraulic pumps 48a-48c. Since the first power source 40 is separated from, and works independently of, the second power source 42, the hydraulic system 14 is a decoupled hydraulic system.

The control system 44 of this example comprises a data processing device 60 and a memory 62 having a computer program stored thereon. The computer program comprises program code which, when executed by the data processing device 60, causes the data processing device 60 to perform, or command performance of, various steps according to the invention.

The wheel loader 10 of this specific example further comprises an optional manual gearshift lever 64. The gearshift lever 64 is configured to send a gearshift signal 66 to the control system 44 indicative of a position of the gearshift lever 64. The control system 44 controls the gearbox 46 based on the gearshift signal 66.

The wheel loader 10 of this specific example further comprises a manual kickdown button 68. When actuated, a kickdown signal 70 is sent to the control system 44. The control system 44 controls the gearbox 46 based on the kickdown signal 70.

The wheel loader 10 of this specific example further comprises a manual disconnection button 72. When actuated, a disconnection signal 74 is sent to the control system 44. The control system 44 controls the disconnection valves 52a, 52b based on the disconnection signal 74.

The wheel loader 10 of this specific example further comprises a manual lifting actuator lever 76a. When actuated, a lifting lever signal 78a indicative of a position of the lifting actuator lever 76a is sent to the control system 44. The control system 44 controls the lifting hydraulic cylinders 36a, 36b based on the lifting lever signal 78a.

The wheel loader 10 of this specific example further comprises a manual tilting actuator lever 76b. When actuated, a tilting lever signal 78b indicative of a position of the tilting actuator lever 76b is sent to the control system 44. The control system 44 controls the tilting hydraulic cylinder 36c based on the tilting lever signal 78b.

Fig. 2 further shows a filter 80a for use by the control system 44 to control the lifting valve arrangement 54a based on the lifting lever signal 78a, a filter 80b for use by the control system 44 to control the lifting valve arrangement 54b based on the lifting lever signal 78a, and a filter 80c for use by the control system 44 to control the tilting valve arrangement 54c based on the tilting lever signal 78b.

The wheel loader 10 of this specific example further comprises an accelerator pedal 82. When actuated, an acceleration signal 84 indicative of a position of the accelerator pedal 82 is sent to the control system 44. The control system 44 controls the first power source 40 based on the acceleration signal 84. Upon receiving the kickdown signal 70, the control system 44 controls the mechanical driveline 12 to perform a gear down shift given that a traveling speed of the wheel loader 10 is below a threshold value.

Fig. 2 further shows the camera device 38. The camera device 38 is configured to send image data 86, as captured by the camera device 38, to the control system 44. The image data 86 is one example of detection data according to the invention. In this example, the control system 44 is configured to perform image processing based on the image data 86 to extract environmental information outside the wheel loader 10.

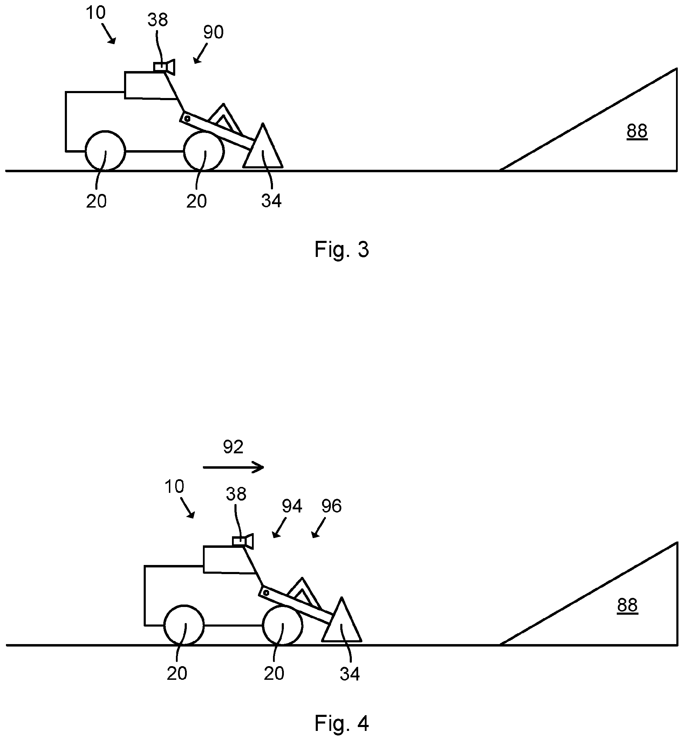

Fig. 3 schematically illustrates a side view of the wheel loader 10 and a pile 88. The phase when the bucket 34 is loaded in the pile 88 is called an excavation phase. During the excavation phase, the wheel loader 10 may approach the pile 88 with lowered, stationary bucket 34.

In Fig. 3, the wheel loader 10 is in a normal response mode 90. In the normal response mode 90, the power output to the hydraulic system 14 may be low, or even zero, even if the power output to the mechanical driveline 12 is substantial. The hydraulic system 14 is thus at standby in the normal response mode 90. In the normal response mode 90, the rotational speeds 58 of the hydraulic pumps 48a-48c are low or zero. In this way, energy consumption is low in the normal response mode 90.

Furthermore, the disconnection valves 52a, 52b are open in the normal response mode 90 such that each hydraulic cylinder 36a-36c is in fluid communication with the respectively associated suspension accumulator 50a, 50b. This reduces the stiffness of the load-arm unit 32.

Fig. 4 schematically illustrates a side view of the wheel loader 10 when traveling towards the pile 88. Arrow 92 indicates the traveling speed of the wheel loader 10. Before the wheel loader 10 reaches the pile 88, the wheel loader 10 is prepared for digging in the pile 88. In order to prepare for the excavation phase, the driver of the wheel loader 10 may for example perform one or more actions that can be used to trigger a shift from the normal response mode 90 to an excavation mode 94. The excavation mode 94 is one example of an increased response mode 96 according to the invention. Identification of the excavation mode 94 can be made based on one or a combination of the following triggers.

The driver may for example push the kickdown button 68 to prepare the wheel loader 10 for the excavation phase. According to the invention, the control system 44 can determine that the wheel loader 10 is in the excavation mode 94 upon receiving the kickdown signal 70. The kickdown signal 70 can thus be used as a trigger for the excavation mode 94.

As a further example, the driver may push the disconnection button 72 to disconnect the suspension accumulators 50a, 50b in order to make the hydraulic cylinders 36a-36c more stiff in preparation for the excavation phase. The control system 44 thereby commands a closing of the disconnection valves 52a, 52b. This improves the ability to force the bucket 34 into the pile 88. According to the invention, the control system 44 can determine that the wheel loader 10 is in the excavation mode 94 upon receiving the disconnection signal 74. The disconnection of any of the suspension accumulators 50a, 50b can thus be used as a trigger for the excavation mode 94.

As a further example, the suspension accumulators 50a, 50b may be disconnected automatically, i.e. without manually pushing the disconnection button 72. Such automatic disconnection can for example be made based on a selected gear, a direction of travel, the kickdown signal 70, a travelling speed or a combination thereof. According to the invention, the control system 44 can determine that the wheel loader 10 is in the excavation mode 94 upon issuing such automatic disconnection signal to any of the suspension accumulators 50a, 50b. Also in this way, the disconnection of any of the suspension accumulators 50a, 50b can be used as a trigger for the excavation mode 94.

As a further example, the driver may lower the load-arm unit 32 in preparation for the excavation phase. According to the invention, the control system 44 can determine that the wheel loader 10 is in the excavation mode 94 based on a position of one or more of the hydraulic cylinders 36a-36c. The position of at least one of the hydraulic cylinders 36a-36c can thus be used as a trigger for the excavation mode 94.

As a further example, the driver may perform a gearshift, for example from the second gear to the first gear in preparation for the excavation phase. The wheel loader 10 may be configured to use a second gear as a base gear. A gearshift pattern where the wheel loader 10 shifts from second gear to the first gear can at least partially be used as an indication that a higher response of the hydraulic system 14 is requested. For example, the shift to the first gear in combination with one or more of a traveling speed 92 of the wheel loader 10 being above or below a threshold value, and a requested torque of the first power source 40 being above or below a threshold value, can be used to trigger the increased response mode 96. According to the invention, the control system 44 can determine that the wheel loader 10 is in the excavation mode 94 based on a gearshift pattern. The gearshift pattern can thus be used as a trigger for the excavation mode 94.

As a further example, the control system 44 can determine that the wheel loader 10 is in the excavation mode 94 based on the acceleration signal 84. The driver may for example accelerate or decelerate the wheel loader 10 in a characteristic way prior to digging into the pile 88. The acceleration signal 84 can thus be used as a trigger for the excavation mode 94.

As a further example, a speed pattern of the wheel loader 10 that is characteristic for the excavation phase can be used to determine an imminent excavation phase. The driver may for example decelerate towards the pile 88 after having changed traveling direction from rearward to forward. According to the invention, the control system 44 can determine that the wheel loader 10 is in the excavation mode 94 based on a speed pattern. The speed pattern of a traveling speed 92 of the wheel loader 10 can thus be used as a trigger for the excavation mode 94.

As a further example, image data 86 from the camera device 38 can be used to determine an imminent excavation phase. Based on the image data 86, the control system 44 may for example determine that the wheel loader 10 approaches the pile 88. According to the invention, the control system 44 can determine that the wheel loader 10 is in the excavation mode 94 based on the image data 86 from the camera device 38. The image data 86 can thus be used as a trigger for the excavation mode 94.

Once the control system 44 determines that the wheel loader 10 is in the increased response mode 96, here the excavation mode 94, the control system 44 controls a response of the hydraulic system 14 to increase. When the response is increased, the hydraulic cylinders 36a-36c will react immediately to movements of the lifting actuator lever 76a and/or the tilting actuator lever 76b. In this way, the wheel loader 10 is provided with a response boost and is thereby prepared for the excavation phase. The response of the hydraulic system 14 can be increased by one or a combination of the following measures.

According to one example, the control system 44 commands an increase of a rotational speed of the second power source 42. As a consequence, the rotational speeds 58 of the hydraulic pumps 48a-48c will increase and the response of the hydraulic system 14 is increased. The performance of the wheel loader 10 is thereby increased. An increase of the rotational speed 58 of the hydraulic pumps 48a-48c is thus one measure for increasing the response of the hydraulic system 14.

As a further example, the control system 44 may change the filters 80a-80c for controlling the valve arrangements 54a-54c. Also in this way, the response of the hydraulic system 14 can be increased. A change of one or more of the filters 80a-80c can thus be used as a measure for increasing the response of the hydraulic system 14.

Increasing the response of the hydraulic system 14 will require some extra energy, but only when actually needed, instead of always in a conventional wheel loader. When the bucket 34 reaches the pile 88, the power output to the mechanical driveline 12 is increased as the pile 88 pushes back on the bucket 34. In the pile 88, the bucket 34 is lifted and tilted in. Due to the increased response, the power output to the hydraulic system 14 will be high immediately when the bucket 34 is lifted. The response of the hydraulic system 14 in the first lift is crucial for the drivability in the excavation phase.

After expiration of a certain time and/or upon determining that none of the triggers for the excavation mode 94 is active, the control system 44 can determine that the wheel loader 10 is again in the normal response mode 90. Upon determining that the wheel loader 10 is in the normal control mode, the control system 44 may control the response of the hydraulic system 14 to decrease to reduce energy consumption.

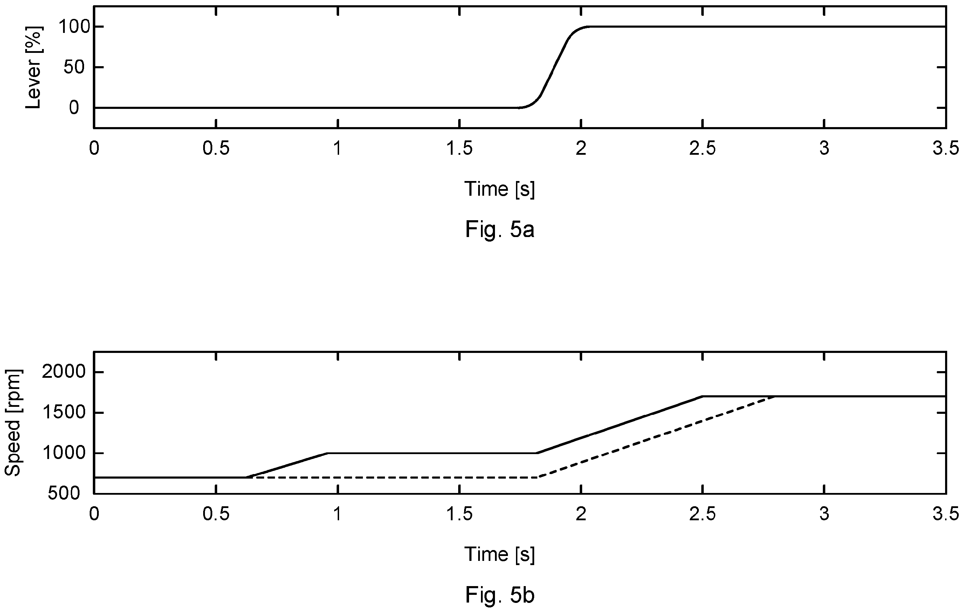

Fig. 5a is a schematic and illustrative diagram of the lifting lever signal 78a versus time. Here, the lifting actuator lever 76a is actuated at approximately 1.8 s.

Fig. 5b is a schematic and illustrative diagram of the speed of a hydraulic pump according to the prior art (dashed line) and the speed of the lifting hydraulic pump 48a of the invention (solid line) as a function of the lifting lever signal 78a in Fig. 5a. In the prior art, the response is slow and the initial performance is consequently low. As shown in Fig. 5b it takes some time until the hydraulic pump according to the prior art is revved up (here to 1500 rpm) after actuation of the lifting actuator lever 76a.

With the invention, the excavation phase is identified and it is thereby determined that the wheel loader 10 is in an increased response mode 96. As a result, the response of the hydraulic system 14 is increased (at approximately 0.7 s) and the lifting hydraulic pump 48a is revved up (here to 1000 rpm) before the driver actuates the lifting actuator lever 76a. Due to the increased response, the lifting hydraulic pump 48a is revved up (here to 1500 rpm) faster when the driver actuates the lifting actuator lever 76a than in the prior art. As a result, the performance of the wheel loader 10 is improved. The timing and amount of revving up the hydraulic pumps 48a-48c when the entering the increased response mode 96 can be tuned depending on implementation.

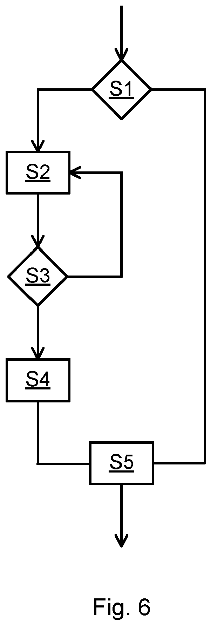

Fig. 6 is a flowchart outlining the general steps of the method of controlling the wheel loader 10 according to the invention. The method comprises a step S1 of determining whether the wheel loader 10 is in an increased response mode 96. The method further comprises a step S2 of increasing the response of the hydraulic system 14 upon determining that the wheel loader 10 is in the increased response mode 96. The method further comprises a step S3 of determining whether the wheel loader 10 remains in the increased response mode 96. Upon determining in step S3 that the wheel loader 10 remains in the increased response mode 96, the increased response of the hydraulic system 14 is maintained. Upon determining that the wheel loader 10 is no longer in the increased response mode 96, the method proceeds to a step S4. In step S4, the response of the hydraulic system 14 is decreased. In a step S5, the method ends. In case it is determined in step S1 that the wheel loader 10 is not in the increased response mode 96, the method proceeds to step S5.

It is to be understood that the present invention is not limited to the embodiments described above and illustrated in the drawings; rather, the skilled person will recognize that many changes and modifications may be made within the scope of the appended claims.

## Claims

1. A method of controlling a working machine (10) comprising a first power source (40) arranged to drive a mechanical driveline (12), a hydraulic system (14) comprising a hydraulic pump (48a-48c) and an actuator (36a-36c) arranged to be driven to move by the hydraulic pump (48a-48c), where the hydraulic pump (48a-48c) is separated from, or disconnectable from, the first power source (40), the method comprising:
- determining (S1) whether the working machine (10) is in an increased response mode (96);
**characterized in that** the method further comprises:
- increasing (S2) a response of the hydraulic system (14) upon determining that the working machine (10) is in the increased response mode (96).

2. The method according to claim 1, wherein the increase of the response comprises increasing a rotational speed (58) of the hydraulic pump (48a-48c).

3. The method according to any of the preceding claims, wherein the increase of the response comprises changing a filter (80a-80c) for a lever signal (78a, 78b) from an actuator lever (76a, 76b) for operating the hydraulic system (14).

4. The method according to any of the preceding claims, wherein the working machine (10) comprises a bucket (34), and wherein the increased response mode (96) is an excavation mode (94).

5. The method according to any of the preceding claims, wherein the determination of whether the working machine (10) is in the increased response mode (96) is made based on one or more of:
- a kickdown signal (70);
- a disconnection of a hydraulic energy storage (50a, 50b) of the hydraulic system (14);
- a position of the actuator (36a-36c);
- a gearshift pattern;
- an acceleration signal (84) from an accelerator pedal (82);
- a speed pattern of a traveling speed (92) of the working machine (10); and
- detection data (86) from a detection device (38).

6. The method according to any of the preceding claims, further comprising decreasing (S4) the response upon determining (S3) that the working machine (10) is no longer in the increased response mode (96).

7. The method according to any of the preceding claims, wherein the working machine (10) comprises a second power source (42) arranged to drive the hydraulic pump (48a-48c), and wherein the first power source (40) is arranged to operate independently of the second power source (42).

8. The method according to any of the preceding claims, wherein the working machine (10) is a wheel loader.

9. A control system (44) for controlling a working machine (10) comprising a first power source (40) arranged to drive a mechanical driveline (12), a hydraulic system (14) comprising a hydraulic pump (48a-48c) and an actuator (36a-36c) arranged to be driven to move by the hydraulic pump (48a-48c), where the hydraulic pump (48a-48c) is separated from, or disconnectable from, the first power source (40), the control system (44) comprising at least one data processing device (60) and at least one memory (62) having at least one computer program stored thereon, the at least one computer program comprising program code which, when executed by the at least one data processing device (60), causes the at least one data processing device (60) to perform the step of:
- determining (S1) whether the working machine (10) is in an increased response mode (96);
**characterized in that** the at least one computer program further comprises program code which, when executed by the at least one data processing device (60), causes the at least one data processing device (60) to perform the step of:
- commanding increase (S2) of a response of the hydraulic system (14) upon determining that the working machine (10) is in the increased response mode (96).

10. The control system (44) according to claim 9, wherein the increase of the response comprises increasing a rotational speed (58) of the hydraulic pump (48a-48c).

11. The control system (44) according to claim 9 or 10, wherein the increase of the response comprises changing a filter (80a-80c) for a lever signal (78a, 78b) from a manual actuator lever (76a, 76b) for operating the hydraulic system (14).

12. The control system (44) according to any of claims 9 to 11, wherein the determination of whether the working machine (10) is in the increased response mode (96) is made based on one or more of:
- a kickdown signal (70);
- a disconnection of a hydraulic energy storage (50a, 50b) of the hydraulic system (14);
- a position of the actuator (36a-36c);
- a gearshift pattern;
- an acceleration signal (84) from an accelerator pedal (82);
- a speed pattern of a traveling speed (92) of the working machine (10); and
- detection data (86) from a detection device (38).

13. The control system (44) according to any of claims 9 to 12, wherein the at least one computer program comprises program code which, when executed by the at least one data processing device (60), causes the at least one data processing device (60) to perform the step of:
- commanding a decrease (S4) of the response upon determining (S3) that the working machine (10) is no longer in the increased response mode (96).

14. A working machine (10) comprising:
- a mechanical driveline (12);
- a first power source (40) arranged to drive the mechanical driveline (12);
- a hydraulic system (14) comprising a hydraulic pump (48a-48c) and an actuator (36a-36c) arranged to be driven to move by the hydraulic system (14), where the hydraulic pump (48a-48c) is separated from, or disconnectable from, the first power source (40); and
- a control system (44) according to any of claims 9 to 13.

15. The working machine (10) according to claim 14, wherein the working machine (10) comprises a bucket (34), and wherein the increased response mode (96) is an excavation mode (94).

16. The working machine (10) according to claim 14 or 15, wherein the working machine (10) comprises a second power source (42) arranged to drive the hydraulic pump (48a-48c), and wherein the first power source (40) is arranged to operate independently of the second power source (42).

17. The working machine (10) according to any of claims 14 to 16, wherein the working machine (10) is a wheel loader.
